# EUROPEAN PATENT SPECIFICATION

(11) **EP 1 518 991 B1**
(45) Date of publication and mention of the grant of the patent: **15.03.2006**
(21) Application number: 04076835.0
(22) Date of filing: 23.06.2004
(51) Int. Cl.: E05F 15/16

(54) **Reel testing method for windows lift devices, sun roofs and sliding doors**
Verfahren zum Testen eines Kabeltrommels für Fensterhebervorrichtungen, Sonnendächer und Schiebetüren
Méthode de test d' un tambour de câble pour des dispositifs de lève-vitre, des toîts ouvrants et des portes coulissantes

(30) Priority: 23.09.2003 ES 200302201
(43) Date of publication of application: 30.03.2005
(73) Proprietor: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(56) References cited:
- EP-A- 1 039 277
- DE-A- 10 132 067
- US-A- 6 116 089

## Description

The present application for a patent of invention relates, as stated in its title, to a reel testing method for window lift devices, which novel manufacturing, conformation and design features fulfil the purpose to which it has been specifically conceived, with a maximum safety and effectiveness.

There exist in the market and therefore they can be considered as the state of the art reels for window lift devices comprising a reel support acting as a guiding member for the driving cable as well as a reel itself which is inserted on the support, and it is rotated therein as the shaft of a small electric motor is applied thereto, said cable being wound and unwound therefrom.

More particularly, the invention refers to a method in which means for measuring vibrations in the reel and in the support thereof in a window lift device as it is rotated, or as the corresponding driving cable is wound or unwound, are combined with mechanical means for said winding and unwinding of the driving cable from the reel, to allow for measuring such vibrations.

Devices or mechanisms that help a window pane to raised or lowered through the window of a door, preferably in the automotive field, comprise, among other parts, a reel, in which a driving cable is wound or unwound and which is connected through the corresponding pulleys to a section member arranged at the lower portion of the window pane or similar means, whilst a small electric motor and the shaft thereof coupled to said reel provide the necessary force so that it may be rotated for winding or unwinding the driving cable, and for raising to lowering the window pane driven through the corresponding guides and joints placed in the periphery of the window in the door.

The driving cable arranged inside the reel is not always initially suitably placed, so that a reduced reel percentage operates producing annoying noises for the user, as they are transmitted through the door panels to the interior of the vehicle with the resulting nuisances, another reel percentage vibrates as the driving cable is wound or unwound and it also transmits this vibration to the interior. It has been finally proven that part of defective reels have a shorter working life than the normal reels since there exist unwanted frictions between the turns of the driving cable.

Such noises and vibrations have their origin in the reel pulley which, even though it has been made having channels on the surface thereof to assist in a good cable winding, it is not always suitably wound thereabout, in such a way that a few outer turns are arranged below the inner ones thus producing frictions therebetween as they are unwound and wound resulting in said noises and vibrations.

No methods and devices are known for detecting noises and vibrations until recently. The present invention has therefore its origin as a consequence of complaints from manufacturers of motor vehicles, who have echoed that of the vehicle repair shops and the like, who are forced to solve these problems even in case there is no breakage of the window lift device, with the resulting cost when motor vehicles are within the guarantee period, when it is obligatory to take charge of these small anomalies which forces to disassemble the door to gain access to the reel and to replace it, adjusting the whole window lift device and assemble the door again.

The present invention is based on a method for detecting vibrations occurring in the winding and unwinding operation of the driving cable from the reel, and it is incorporated in the production line thereof. In the reel production final stage, the carriage onto which the reel moves is stopped, a sensor that is applied directly on the surface of the reel support is lowered, at the same time said driving cable is pulled by means of a hook forcing the cable to be unwound from the reel, the reel is then rotated to wind the driving cable again, and finally the carriage starts again.

Vibrations sensed by the sensor are transferred to the corresponding computer and compared, by means of a software owned by the same applicant, with a value range which are considered to be as normal and the quality of the reel is thus determined.

Other details and features will be apparent from the following description, which refers to the drawings herein enclosed, in which preferred details are diagrammatically shown; these details are cited by means of an illustrative but not limitative example of the present invention.
Fig. 1 is a plan view of a surface of the support (10) of the reel (17);
Fig. 2 is a plan view of another surface of the support (10) of the reel (17);
Fig. 3 is a front elevational view of the reel (17).

A detailed list of the various parts cited in the present patent application is given below:(10) reel, (11) support, (11a) and (11b) extensions, (12) outlet, (13) inlet, (14) lugs, (15) lugs, (16) hole, (17) reel, (18) ribbing (19) labyrinth, (20) channels, (22) shaft, (23) ducts, (24) middle fitting portion, (25) driving cable, (26) probe, (27) computer.

As it can be seen from the figures herein enclosed a reel to which the method of the invention is applied comprises a reel support (11) having a substantially circular shape the base of which is provided with horizontal extensions (11a) and (11b) defining an inlet (13) and an outlet for a driving cable (25) and ducts (23) channelling said cable (25).

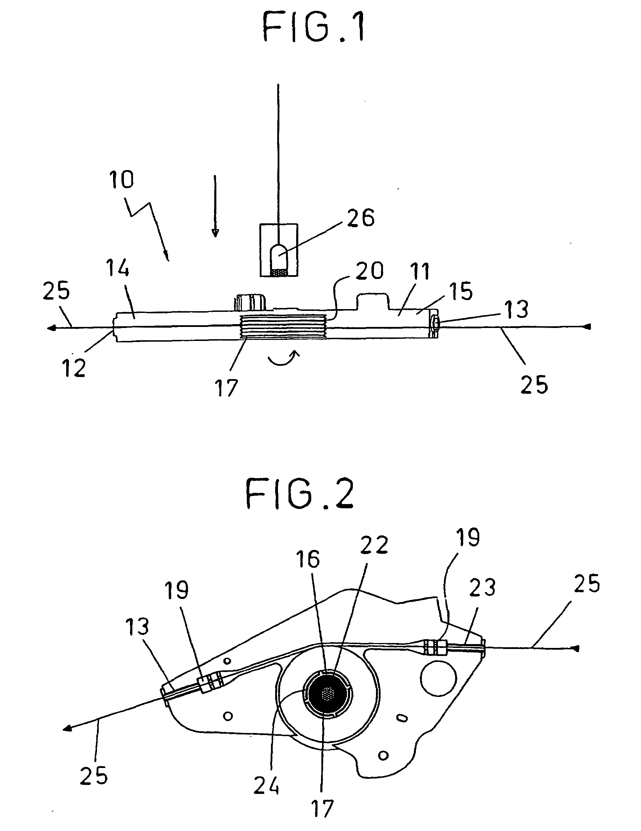

Reel (17) is inserted in the inner part of the reel support (11), see Fig. 2, in the middle portion (24) of which a ribbed portion is provided for fitting the driving shaft serving the purpose of rotating the reel and consequently the cable (25). The central surface of the reel (17) is provided with channels (20) to facilitate an orderly winding of the cable (25). The previously described arrangement is however unable to 100% prevent noises and vibrations of a reduced number of reels and for this purpose the present method has been designed consisting in introducing at the production line the support (11) and the reel (17) through electronic means for sensing vibrations in the reel (17) and mechanical means for rotating thereof and for pulling the cable (25).

Means for sensing vibrations in the reel (17) comprise a probe (26) that is applied on the reel support (11) connected by the suitable means to a computer (27) which, by means of a specially designed software, receives the value measured by the probe (26) which are compared with a previously stored value range generating subsequently an acceptance or rejection signal of the corresponding tested reel.

Once the probe (26) has been applied on the surface of the reel (11) and simultaneously, by means of grippers or the like, the cable (25) is pulled from the reel (17), the probe detects noise and vibrations generated by reel (17) and cable (25), then following winding of the cable (25) through the action of an electric motor on the middle portion (24).

Once having been sufficiently described what the present patent application consists in accordance to the enclosed drawings, it is understood that any detail modification can be introduced as appropriate, provided that variations may alter the essence of the invention as summarised in the appended claims.

## Claims

1. Reel testing method for window lift devices, sun roofs and sliding doors the type of which comprising a support (11) and a reel (17) inside of which and helped by channels (20) at least one driving cable (25) is wound and unwound guided by extensions (14) and (15) forming an inlet (13) and an outlet (12) for the cable (25), **characterised in that** said method consists in applying a probe (26) over a point in the outer surface of the support (11) and simultaneously pulling the cable (25) by means of grippers or the like for unwinding it from the reel (17), the cable being subsequently wound again by means of the shaft of an electric motor or a manually operable device applied to the middle fitting portion (24), a signal generated by the probe (26) being transmitted to a computer (27) for being compared with a value range considered as acceptable.

## Patentansprüche

1. Spulentestverfahren für Fensterhebevorrichtungen, Schiebedächer und Schiebetüren, bestehend aus einer Halterung (11) und einer Spule (17), in deren Innerem mit Unterstützung von Auskehlungen (20) mindestens ein Antriebskabel (25) auf- und abgespult wird, und zwar geführt von Verlängerungen (14) und (15), die einen Eingang (13) und einen Ausgang (12) für das Kabel (25) bilden, **dadurch gekennzeichnet, dass** besagtes Verfahren darin besteht, dass ein Messkopf (26) auf eine Stelle an der Außenfläche der Halterung (11) aufgebracht wird und gleichzeitig das Kabel (25) mit Hilfe von Greifern o. Ä. gezogen wird, sodass es sich von der Spule (17) abrollt, wobei das Kabel anschließend mit Hilfe der Achse eines Elektromotors oder einer manuell bedienbaren Vorrichtung, die auf das mittlere Passstück (24) aufgebracht wird, wieder aufgerollt wird, wobei der Messkopf (26) ein Signal erzeugt, das an einen Rechner (27) übertragen wird, um es mit einem als zulässig betrachteten Messbereich zu vergleichen.

## Revendications

1. Méthode de test de bobine pour des dispositifs de levée de fenêtre, de toit ouvrant et de portières coulissantes dont le type comprend un support (11) et une bobine (17) à l'intérieur de laquelle, et aidé de rainures (20), au moins un câble conducteur (25) est enroulé et déroulé, guidé par des extensions (14) et (15), formant une entrée (13) et une sortie (12) pour le câble (25), **caractérisée par le fait que** cette méthode consiste à appliquer une sonde (26) sur un point de la surface externe du support (11) et à pousser simultanément le câble,(25) au moyen de pinces de préhension ou similaires pour dérouler la bobine (17), le câble étant donc enroulé à nouveau au moyen de la tige d'un moteur électrique ou d'un dispositif manuel appliqué sur la moitié de la portion de réglage (24), un signal généré par la sonde (26) étant transmis à un ordinateur (27) afin de le comparer à une plage de valeurs considérée comme étant acceptable.
